# EUROPEAN PATENT APPLICATION

(11) **EP 2 055 670 A2**
(43) Date of publication of application: **06.05.2009**
(21) Application number: 08167350.1
(22) Date of filing: 23.10.2008
(51) Int. Cl.: C01B 3/38

(54) **Fuel Reforming Device and Fuel Cell System**

(30) Priority: 30.10.2007 KR 20070109500
(71) Applicant: Samsung SDI Co., Ltd., Suwon-si, Gyeonggi-do (KR)
(72) Inventor: Lee, Sung-Chul c/o Legal & IP Team Samsung SDI Co., Ltd., Gyeonggi-do (KR); Kim, Tae-Keun c/o Legal & IP Team Samsung SDI Co., Ltd., Gyeonggi-do (KR); Ahn, Jin-Goo c/o Legal & IP Team Samsung SDI Co., Ltd., Gyeonggi-do (KR); Son, In-Hyuk c/o Legal & IP Team Samsung SDI Co., Ltd., Gyeonggi-do (KR); Kong, Sang-Jun c/o Legal & IP Team Samsung SDI Co., Ltd., Gyeonggi-do (KR); Lee, Yong-Kul c/o Legal & IP Team Samsung SDI Co., Ltd., Gyeonggi-do (KR); Shin, Woo-Cheol c/o Legal & IP Team Samsung SDI Co., Ltd., Gyeonggi-do (KR); Kim, Ju-Yong c/o Legal & IP Team Samsung SDI Co., Ltd., Gyeonggi-do (KR)
(74) Representative: Perkins, Dawn Elizabeth

(57) **Abstract**

A fuel reforming device that prevents a flash-back phenomenon includes a reforming reactor and a heater. The reforming reactor reforms a fuel, and the heater provides thermal energy to the reforming reactor by generating the thermal energy by a catalytic oxidation reaction between a catalytic layer and an oxidation reaction material. The heater includes an inflow pipe that receives the oxidation reaction material, an outflow pipe that outputs a flue gas generated by the catalytic oxidation reaction, and a flue gas retrieving pipe that connects the outflow pipe and the inflow pipe to direct the flue gas to the inflow pipe.

## Description

Aspects of the present invention relate to a fuel cell system, and more particularly to a fuel reforming device that carries out a catalyzed steam reforming reaction and in which a flash-back phenomenon from a heater of the fuel reforming device is prevented.

Fuel cells generate electrical energy using a hydrocarbon group fuel. Fuel cells are classified as polymer electrolyte membrane fuel cells and direct oxidation membrane fuel cells. The direct oxidation membrane fuel cell is generally referred to as a direct methanol fuel cell (DMFC).

The polymer electrolyte membrane fuel cell has superior output characteristics, a low operating temperature, and fast starting and response characteristics. The polymer electrolyte membrane fuel cell has been widely used as a portable power source for vehicles, a distributed power source for houses and public buildings, and a mini power source for electronic devices.

A fuel cell system employing the polymer electrolyte membrane fuel cell typically includes a fuel cell main body, a fuel reforming apparatus, a fuel supply, and an oxidizing agent supply. The fuel supply includes a fuel tank and a fuel pump to supply a fuel to the fuel reforming apparatus. The fuel reforming apparatus generates hydrogen gas by reforming the fuel and supplies the hydrogen gas to the fuel cell main body. The fuel cell main body generates electrical energy by inducing an electrochemical reaction between the hydrogen gas from the fuel reforming apparatus and the oxidizing agent.

In the fuel cell system, the fuel reforming apparatus includes a heater to generate heat and a reforming reactor to reform a fuel using the thermal energy. The heater may be a burner method or catalytic oxidation reactor. A burner is disadvantageous as a heater, since a burner method needs a predetermined combustion space so that heat is not directly applied to the reforming reactor and thus, it is difficult to reduce the size of the heater. The size a catalytic oxidation reactor may be reduced since a lower temperature is used. However, a catalytic oxidation reactor has disadvantages in that a flash-back phenomenon may be easily generated on the catalytic layer and a flame may occur around an inlet nozzle of the heater. Therefore, when a conventional fuel reforming device uses a catalytic oxidation reactor, the lifespan thereof is short.

The above information disclosed in this Background section is only for enhancement of understanding of the background of the invention. The inclusion of description in this section is not to be construed as a representation that such description forms the prior art that is already known in this country to a person of ordinary skill in the art.

Aspects of the present invention provide a fuel reforming device that calculatedly provides a flue gas output from a heater back into the heater and prevents a flash-back phenomenon caused in the heater, and a fuel cell system including the fuel reforming device.

According to an embodiment of the present invention, a fuel reforming device includes a reforming reactor and a heater. The reforming reactor reforms a fuel. The heater provides thermal energy to the reforming reactor and generates the thermal energy by a catalytic oxidation reaction between a catalytic layer and an oxidation reaction material. The heater includes an inflow pipe that receives the oxidation reaction material, an outflow pipe that outputs a flue gas generated by the catalytic oxidation reaction, and a flue gas retrieving pipe that connects the outflow pipe and the inflow pipe to direct the flue gas to the inflow pipe.

According to an aspect of the present invention, the flue gas is drawn or impelled from the outflow pipe to the inflow pipe.

According to an aspect of the present invention, the fuel reforming device further includes a pump that impels the flue gas from the outflow pipe to the inflow pipe.

According to an aspect of the present invention, the inflow pipe includes a region having a restricted internal diameter and wherein the flue gas retrieving pipe connects to the inflow pipe at the region having a restricted internal diameter such that the flow of oxidation material through the inflow pipe creates a suction that draws flue gas into the inflow pipe.

According to an aspect of the present invention, the fuel reforming device further includes a valve to selectively switch a flow of the flue gas. The valve may be positioned in the outflow pipe to direct the flue gas through the outflow pipe or into the flue gas retrieving pipe or may be positioned to selectively direct flue gas from the flue gas retrieving pipe into the inflow pipe.

According to an aspect of the present invention, the valve is formed such that the flue gas flows to the flue gas retrieving pipe when an amount of nitrogen and water in the flue gas is greater than a predetermined value.

According to an aspect of the present invention, the oxidation reaction material includes the fuel and air.

According to an aspect of the present invention, the oxidation reaction material includes the fuel and air, the inflow pipe comprises a fuel inflow pipe that receives the fuel and an air inflow pipe that receives the air, and the flue gas retrieving pipe is connected to the air inflow pipe.

According to another embodiment of the present invention, a fuel cell system includes a fuel supply unit, a fuel reforming device, and a fuel cell main body. The fuel reforming device reforms a fuel supplied from the fuel supply unit and generates a reforming gas containing hydrogen. The fuel cell main body generates electrical energy by inducing an electrochemical reaction of the reforming gas and an oxidizing agent gas. The fuel reforming device includes a reforming reactor that reforms the fuel and a heater that provides thermal energy to the reforming reactor and generates the thermal energy by a catalytic oxidation reaction between a catalytic layer and an oxidation reaction material. The heater includes an inflow pipe that receives the oxidation reaction material, an outflow pipe that outputs a flue gas generated by the catalytic oxidation reaction, and a flue gas retrieving pipe that connects the outflow pipe and the inflow pipe to direct the flue gas to the inflow pipe.

According to an aspect of the present invention, the inflow pipe includes a fuel inflow pipe that receives the fuel and an air inflow pipe that receives the air, and the fuel flowing to the fuel inflow pipe and the reforming reactor is supplied from the fuel supply unit.

The fuel cell system further includes an oxidizing agent supply unit that supplies the oxidizing agent gas to the fuel cell main body.

According to an embodiment of the present invention, there is provided a method of controlling a temperature of a heater that provides thermal energy to a reforming reactor of a fuel cell system through a catalytic oxidation reaction between a catalytic layer and an oxidation reaction material that enters the heater through an input pipe, the catalytic oxidation reaction generating a flue gas that exits the heater through an outflow pipe and/or of preventing a flash-back phenomenon of the heater, the method comprising directing at least a portion of the flue gas from the outflow pipe to the inflow pipe of the heater.

In the fuel reforming device according to the aspects of the present invention and the fuel cell system including the fuel reforming device, a flash-back phenomenon generated in the heater may be prevented. Accordingly, the durability of the heater according to aspects of the present invention may be improved, and a lifespan of the fuel reforming device may be increased.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a schematic diagram of a fuel cell system according to an embodiment of the present invention;
FIG. 2 is a schematic diagram of a fuel reforming device according to an embodiment of the present invention;
FIG. 3 is a schematic diagram of the fuel reforming device of FIG. 2 including a pump provided to a flue gas retrieving pipe;
FIG. 4 is a schematic diagram of the fuel reforming device of FIG. 2 including a valve provided between the flue gas retrieving pipe and an outflow pipe;
FIG. 5 is a schematic diagram of the fuel reforming device of FIG. 2 including an orifice unit provided between the flue gas retrieving pipe and an inflow pipe;
FIG. 6 is an enlarged cross-sectional view of the orifice unit A shown in FIG. 5;
FIG. 7 is a schematic diagram of a fuel reforming device according to another embodiment of the present invention;
FIG. 8A is a data graph representing internal temperatures of the fuel reforming device according to the embodiment of FIG. 2;
FIG. 8B is a data graph representing internal temperatures of a conventional fuel reforming device; and
FIG. 9A shows picture of internal temperatures of the conventional fuel reforming device in condition that the air-fuel ratio λ is 1.4, and FIG. 9B and FIG. 9C show pictures of internal temperatures of the fuel reforming device according to the embodiment of FIG. 2 in condition that the air-fuel ratio λ is 1.4 with flue gas supply of 3L/min and 5L/min, respectively.

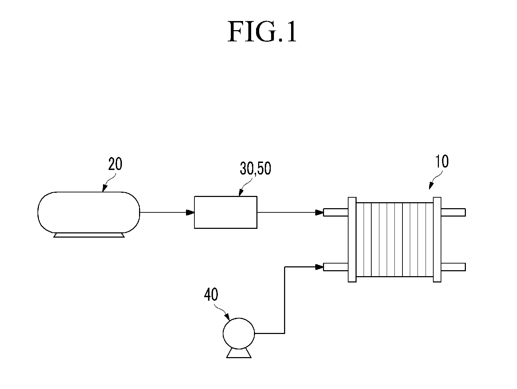

Reference will now be made in detail to the present embodiments of the present invention, examples of which are illustrated in the accompanying drawings, wherein like reference numerals refer to the like elements throughout. The embodiments are described below in order to explain the present invention by referring to the figures. FIG. 1 is a schematic diagram of a fuel cell system according to an embodiment of the present invention. The fuel cell system includes a fuel cell main body 10 that generates electric energy by inducing an electrochemical reaction of a reforming gas containing hydrogen and an oxidizing agent gas containing oxygen. The fuel cell main body 10 typically has a stacked structure in which a plurality of unit cells are consecutively stacked. A unit cell is the minimum unit for generating electrical energy. In general, the stacked structure of the fuel cell main body 10 is referred to as a fuel cell stack. An end plate may be connected to the left-most side of the set.

Each unit cell includes a membrane-electrode assembly (MEA) in which an electrochemical reaction is generated, and separators of a plate shape are disposed on both surfaces of the MEA. A first separator is close to an anode terminal of the MEA, and a reforming gas flows to a first channel formed on a surface where the first separator is close to the anode terminal. A second separator is close to a cathode terminal of the MEA, and an oxidizing agent gas flows to a second channel formed on a surface where the second separator is close to the cathode terminal. In the unit cell of the above configuration, hydrogen and oxygen are electrochemically reacted through the MEA, and electrical energy may be generated. It is to be understood that the present invention is not limited to the fuel cell stack described above and that other fuel cell configurations and geometries may be used.

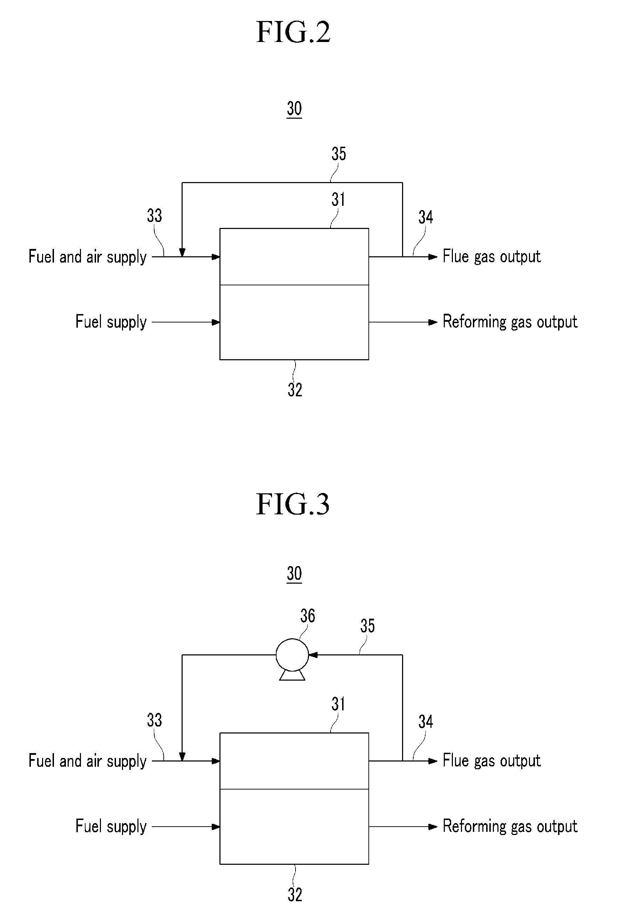

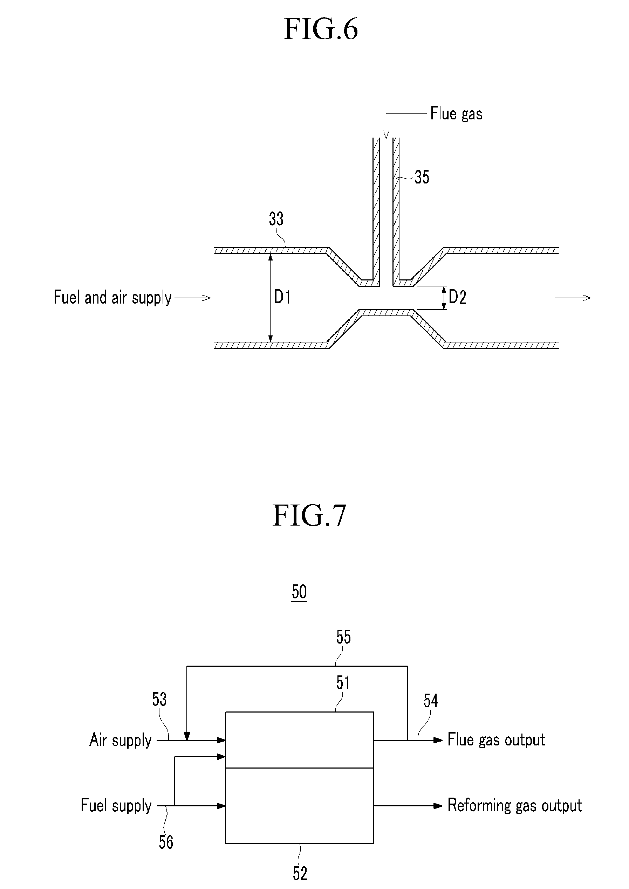

The fuel supply unit 20 includes a fuel tank that stores a fuel and a pump that supplies the fuel to the fuel reforming device 30 or 50. (The fuel reformer of FIG. 1 may be the fuel reformer 30 as shown in FIGS. 2 - 6 or the fuel reformer 50 shown in FIG. 7.)

The fuel reforming device 30 or 50 receives fuel from the fuel supply unit 20, induces a reforming reaction in the fuel, and generates a reforming gas containing hydrogen derived from the fuel. The fuel reforming devices 30 and 50 will be described later in further detail.

An oxidizing agent supply unit 40 supplies an oxidizing agent gas to the fuel cell main body 10. The oxidizing agent supply unit 40 may use an air pump and to supply air from the atmosphere to the fuel cell main body 10 as an oxidizing agent gas.

FIG. 2 is a schematic diagram of a fuel reforming device according to an embodiment of the present invention. In all of the embodiments shown in FIGS. 2 - 7, flue gas is supplied to the heater of the fuel reforming device such that a backfire effect caused by a catalytic oxidation reaction in the heater may be prevented.

As shown in FIG. 1 and FIG. 2, the fuel reforming device 30 reforms a fuel supplied from the fuel supply unit 20 to generate a reforming gas, and supplies the reforming gas to the fuel cell main body 10. The fuel reforming device 30 includes various constituent elements according to a fuel reforming method. Among the constituent elements, an evaporator (not shown), a heater 31, and a reforming reactor 32 may be provided to perform a steam reforming reaction.

The evaporator heats water and generates steam used to perform the steam reforming reaction. The heater 31, which is a catalytic oxygenator, has a catalyst layer, and when air and fuel are supplied to the heater 31, the heater 31 generates thermal energy by a catalytic oxidation reaction. The heater 31 is positioned near the reforming reactor 32 to supply thermal energy to the reforming reactor 32. The reforming reactor 32 uses the thermal energy supplied from the heater 31 to catalyze the reforming reaction of the fuel and generates a reforming gas containing hydrogen from the fuel.

Particularly, according to the embodiments described in FIGS. 2 - 7, the heater 31 is formed to cyclically receive a flue gas. That is, fuel and air are respectively supplied to the heater 31 to perform the catalytic oxidation reaction. Thereby, the heater 31 generates thermal energy by the catalytic oxidation reaction, and outputs a flue gas that is generated as a result of the catalytic oxidation reaction. The heater 31 includes an inflow pipe 33 that takes in fuel and air and an outflow pipe 34 that outputs flue gas generated as a result of the catalytic oxidation reaction. The fuel and air may be mixed to be supplied by one inflow pipe 33 or may be respectively supplied by corresponding inflow pipes. It is to be understood that the term "pipe" as used herein may refer broadly to any form of conduit that directs the flow of a fluid.

The heater 31 further includes a flue gas retrieving pipe 35 that connects the outflow pipe 34 to the inflow pipe 33such that the flue gas output from the outflow pipe 34 is directed to the inflow pipe 33. In this case, since the flue gas is a gas that remains after the fuel and the air are used to perform the catalytic oxidation reaction, the flue gas contains a large amount of nitrogen compounds and water.

As described in the conventional art, when the fuel and the air are supplied to an inlet of a heater that is connected to the inflow pipe of a catalytic oxygenator, a flame may spread rapidly toward the inlet. Accordingly, a flash-back phenomenon may easily occur at the inlet of the heater. However, in the fuel reforming device 30 according to an embodiment of the present invention, the flue gas along with the fuel and the air is supplied to the heater. Thereby, since the amount of nitrogen is increased relative to the amount of fuel and oxygen supplied to the heater 31, the flash-back phenomenon is less likely to be generated at the inlet connected to the inflow pipe 33. In addition, in the heater 31, the water in the flue gas prevents a rapid increase of temperature at the inlet.

The fuel reforming device 30 according to an embodiment of the present invention is structured to efficiently supply the flue gas to the heater 31.

FIG. 3 is a schematic diagram of the fuel reforming device 30 including a pump 36 provided to the flue gas retrieving pipe 35 shown in FIG. 2 to supply the flue gas to the inflow pipe 33. The pump 36 is not limited and may be in any configuration known in the art. The pump 36 may be driven by a previously set operational condition or by a controller to control the amount of supplied flue gas.

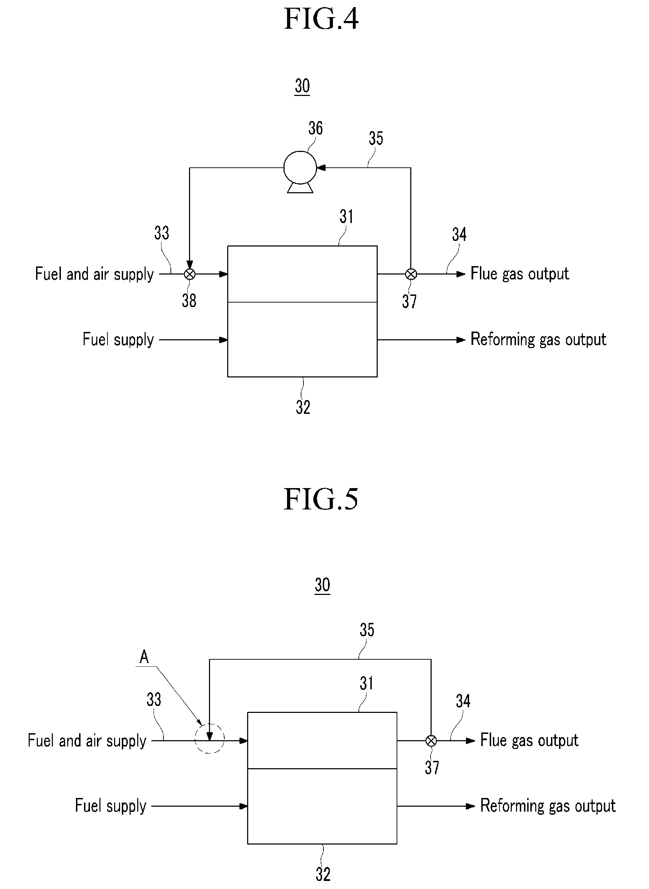

FIG. 4 is a schematic diagram of the fuel reforming device 30 including a valve 37 provided between the flue gas retrieving pipe 35 shown in FIG. 2 and the outflow pipe 34. The valve 37 is provided to an area where the outflow pipe 34 and the flue gas retrieving pipe 35 are connected to each other, so that the flow of the flue gas may be selectively changed. That is, the valve 37 selectively closes the outflow pipe 34 according to an operation of a controller so that the flue gas may be supplied to the flue gas retrieving pipe 35 or the valve 37 selectively closes an inlet of the flue gas retrieving pipe 35 according to an operation of a controller so that the flue gas may be externally output through the outflow pipe 34. Moreover, the valve 37 may control an opening and closing level so that a predetermined amount of flue gas may be supplied to the flue gas retrieving pipe 35. In addition, the valve 37 may be controlled such that the flue gas is supplied to the flue gas retrieving pipe 35 when the amount of nitrogen and water in the flue gas is greater than a predetermined value.

In the fuel reforming device 30, in addition to the valve 37 connected to the area where the outflow pipe 34 and the flue gas retrieving pipe 35 are connected to each other, a second valve 38 may be provided where the inflow pipe 33 and the flue gas retrieving pipe 35 are connected to each other. Thereby, the two valves 37 and 38 cooperate with each other so that the flue gas may be supplied to the inflow pipe 33.

Alternatively, as shown in FIG. 5, an orifice unit A may be provided in place of the second valve 38 to draw flue gas into the inflow pipe 33 of the heater 31.

FIG. 6 is an enlarged cross-sectional view of an orifice unit A shown in FIG. 5. The orifice unit A is a pipe structure that controls the amount of flue gas drawn into the inflow pipe 33 and that measures the flowing speed. In the orifice unit A, an internal section of the inflow pipe 33 has a diameter D1, except where the inflow pipe 33 connects with the flue gas retrieving pipe 35, where the internal section of the inflow pipe 33 is steeply reduced to have a diameter D2. Therefore, in the orifice unit A, according to the Bernoulli principle, the flowing speed increases and pressure is reduced at an area where the internal section has the narrow diameter D2. Since the flue gas retrieving pipe 35 is connected to the area where the internal section has the narrow diameter D2 in the inflow pipe 33, the lower pressure generated in this section of the inflow pipe 33 helps to draw the flue gas into the inflow pipe.

FIG. 7 is a schematic diagram of a fuel reforming device according to another embodiment of the present invention

As shown in FIG. 1 and FIG. 7, the fuel and the air as oxidation reaction materials are supplied to a heater 51 in the fuel reforming device 50. That is, the heater 51 includes an air inflow pipe 53 that receives air and a fuel inflow pipe 56 that receives fuel. The fuel inflow pipe 56 supplies fuel from the fuel supply unit 20 of the fuel cell system to both the heater 51 and the reforming reactor 52.

Thereby, the heater 51 generates thermal energy by a catalytic oxidation reaction as air and fuel are supplied, and the reforming reactor 52 uses the thermal energy supplied from the heater 51 in a reaction to generate a reforming gas containing hydrogen from the fuel.

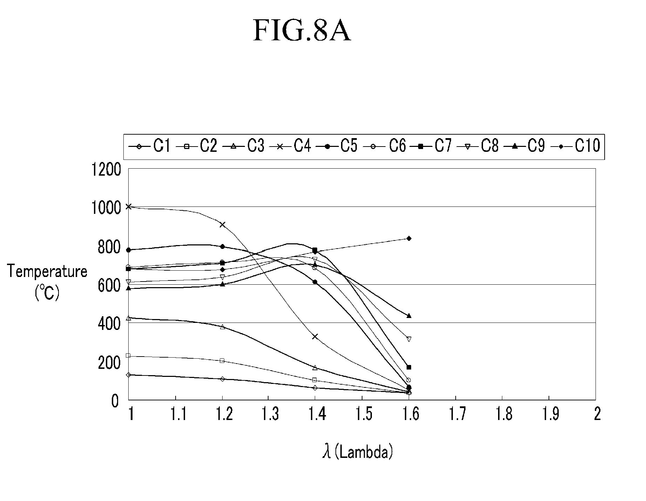

FIG. 8A is a data graph representing internal temperatures in an experimental operation of the fuel reforming device 30 shown in FIG. 2. The fuel reforming device 30 was established such that the flue gas was supplied through the flue gas retrieving pipe 35 to the inflow pipe 33 at a rate of 5 L/min. The amount of fuel supplied to the heater 31 was maintained, and the amount of air was varied. In addition, a tester measured temperatures of respective areas C1 to C10 of the heater 31 at a predetermined time when the catalytic oxidation reaction was generated in the heater 31.

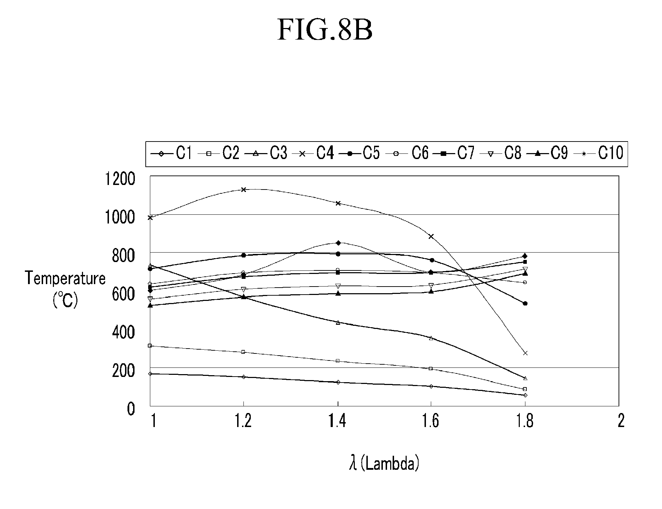

FIG. 8B is a data graph representing internal temperatures in an experimental operation of a conventional fuel reforming device. The conventional fuel reforming device used a heater under same condition used in FIG. 8A, but the flue gas is not supplied to the heater. In FIG. 8B, the amount of fuel supplied to the heater was maintained, and the amount of air was varied. In addition, a tester measured temperatures of respective areas C1 to C10 of the heater at a predetermined time when the catalytic oxidation reaction was generated in the heater.

As shown in FIG. 8A and FIG. 8B, the temperatures of the heater 31 of FIG. 2 were generally lower than those of the conventional heater in the respective areas C1 to C10. Furthermore, as shown in FIG. 8A , as the air-fuel ratio λ increased, the temperature of the heater 31 of FIG. 2 was reduced to be lower than the temperature of the conventional heater, as shown in FIG. 8B. When the air-fuel ratio λ was 1.6, the temperature of the heater 31 shown in FIG. 8A was steeply reduced to be lower, but temperatures of the heater shown in FIG. 8B were still high in predetermined areas C4, C5, and C6.

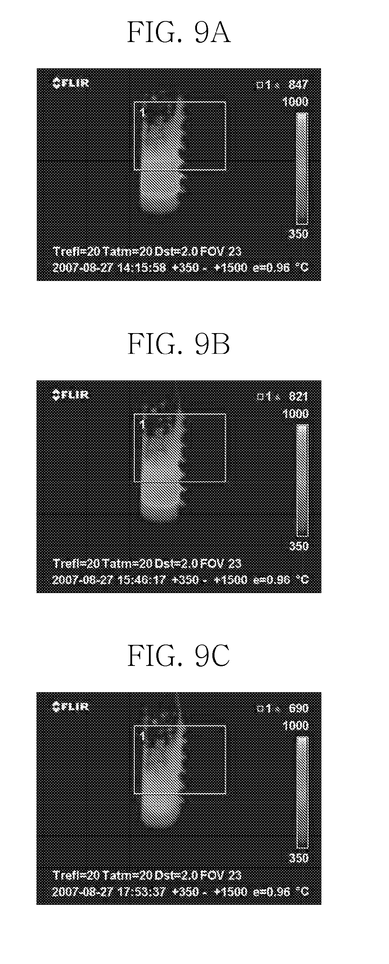

FIG. 9A shows picture of internal temperatures in an experimental operation of the conventional fuel reforming device in condition that the air-fuel ratio λ is 1.4, and FIG. 9B and FIG. 9C show pictures of internal temperatures in an experimental operation of the fuel reforming device according to the embodiment of FIG. 2 in condition that the air-fuel ratio λ is 1.4 with flue gas supply of 3L/min and 5L/min, respectively.

The pictures shown in FIGs. 9A to 9C show predetermined areas of the heater of the fuel reforming device, and temperatures may be determined by the shading in the predetermined areas.

Temperatures of a Case 1 of FIG. 9B (flue gas of 3 L/min) and a Case 2 of FIG. 9C (flue gas of 5 L/min) are respectively 821°C and 690°C, which are lower than 847°C of a comparative example of FIG. 9A in which the flue gas is not supplied.

As shown in the data graphs, since the fuel reforming devices 30 and 50 according to the embodiments of the present invention are formed such that the flue gas is supplied to the heaters 31 and 51, the temperatures of the heaters 31 and 51, respectively, are lower than that of the conventional heater. That is, the flash-back phenomenon may be suppressed at the heaters 31 and 51 according to aspects of the present invention compared to the conventional heater.

Although a few embodiments of the present invention have been shown and described, it would be appreciated by those skilled in the art that changes may be made in this embodiment without departing from the principles of the invention, the scope of which is defined in the claims and their equivalents.

## Claims

1. A fuel reforming device comprising:
a reforming reactor (32, 52); and
a heater (31, 51) configured to heat the reforming reactor (32, 52) and comprising a catalytic layer for catalysing a catalytic oxidation reaction between components of an oxidation reaction mixture to generate thermal energy,
wherein the heater (31, 51) includes an inflow pipe (33, 53) for receiving at least one component of the oxidation reaction mixture, an outflow pipe (34, 54) for outputting a flue gas generated by the catalytic oxidation reaction, and a flue gas retrieving pipe (35, 55) connecting the outflow pipe (34, 54) and the inflow pipe (33, 53) to direct the flue gas into the inflow pipe (33, 53).

2. The fuel reforming device of claim 1, wherein the at least one component received by the inflow pipe (33, 53) is air.

3. The fuel reforming device of claim 1 or 2, comprising means for drawing or impelling the flue gas from the outflow pipe (34, 54) to the inflow pipe (33, 53).

4. The fuel reforming device of claim 3, wherein the means for impelling the flue gas comprises a pump (36) that impels the flue gas from the outflow pipe (34, 54) to the inflow pipe (33, 53).

5. The fuel reforming device of claim 4, wherein the pump (36) is provided in the flue gas retrieving pipe (35).

6. The fuel reforming device of claim 3, wherein the inflow pipe (33) includes a region having a restricted internal diameter and wherein the flue gas retrieving pipe (35) connects to the inflow pipe (33) at the region having a restricted internal diameter such that the flow of oxidation material through the inflow pipe (33) creates a suction that draws flue gas into the inflow pipe (33).

7. The fuel reforming device of any one of the preceding claims, further comprising a valve (37, 38) operable to control a flow of the flue gas through the flue gas retrieving pipe (35, 55).

8. The fuel reforming device of claim 7, wherein the valve (37) is positioned in the outflow pipe (34) and is operable to selectively direct the flue gas through the outflow pipe (34) or into the flue gas retrieving pipe (35).

9. The fuel reforming device of claim 7 or 8, wherein the valve (38) is positioned in the inflow pipe (33) and is operable to selectively direct the flue gas from the flue gas retrieving pipe (35) into the inflow pipe (33).

10. A fuel cell system comprising:
a fuel supply unit (20);
a fuel reforming device (30, 50) according to any one of the preceding claims, configured to reform a fuel supplied from the fuel supply unit (20) and generate a reforming gas containing hydrogen; and
a fuel cell main body that generates electrical energy by inducing an electrochemical reaction of the reforming gas and an oxidizing agent gas.

11. A method of operating a heater (31, 51) that heats a reforming reactor (32, 52) of a fuel cell system through a catalytic oxidation reaction comprising:
supplying an oxidation reaction mixture to the heater (31, 51), at least one of the components of the mixture being supplied through an input pipe (33, 53);
directing a flue gas that exits the heater (31, 51) through an outflow pipe (34, 54); and
directing at least a portion of the flue gas from the outflow pipe (34, 54) to the inflow pipe (33, 53) of the heater (31, 51).

12. The method of claim 11, comprising controlling the directing of at least a portion of the flue gas from the outflow pipe (34, 54) to the inflow pipe (33, 53) of the heater (31, 51) according to a temperature of the heater (31, 51).

13. The method of claim 11 or 12, comprising directing the flue gas to the inflow pipe (33, 53) of the heater (31, 51) when an amount of nitrogen and water in the flue gas is greater than a predetermined value.

14. The method of any one of claims 11 to 13, wherein the directing of the flue gas from the outflow pipe (34, 54) to the inflow pipe (33, 53) of the heater (31, 51) is controlled by a pump (36).

15. The method of any one of claims 11 to 13, wherein the directing of at least a portion of the flue gas from the outflow pipe (34) to the inflow pipe (33) of the heater (31) comprises controlling a first valve (37) formed in the outflow pipe (34) to selectively direct the flue gas from the outflow pipe (34), and/or controlling a second valve (38) formed in the inflow pipe (33) to selectively direct the flue gas into the inflow pipe (33).
